# EUROPÄISCHE PATENTANMELDUNG

(11) **EP 0 566 528 A1**
(43) Veröffentlichungstag der Anmeldung: **20.10.1993**
(21) Anmeldenummer: 93810223.3
(22) Anmeldetag: 26.03.1993
(51) Int. Cl.: B62D 29/00, B62D 27/06

(54) **Plattform für Nutzfahrzeuge**

(30) Priorität: 14.04.1992 CH 1241/92
(71) Anmelder: ALUSUISSE-LONZA SERVICES AG, CH-8034 Zürich (CH)
(72) Erfinder: Hrasche, Heinrich, CH-8953 Dietikon (CH)

(57) **Zusammenfassung**

. Die Plattform (10) in Klemmbauweise hat längs- oder querverlegte Bodenplatten (12). Innerhalb eines biegesteifen Aussenrahmens (18, 20) erstrecken sich Querträgerprofile (14) über die ganze Breite (b). Im Bereich der Querträgerprofile (14) durchschnittene und unterbrochene Längsträgerprofile (24) erstrecken sich über wenigstens einen Teil der Länge (1) des Aussenrahmens (18, 20). Die Trägerprofile 14, 24 sind mittels verdrehungssicherer Winkelstücke (22) auf einer Ebene miteinander verbunden. Die Winkelstücke (22) haben aussenliegende, sich über beide Schenkel (54, 56) erstreckende Führungsrippen (60) und sind-durch Klemmstücke (16) formschlüssig auf entsprechende Führungsflächen (44) von aneinanderliegenden Quer- und Teillängsträgerprofilen (14, 24) geklemmt.

Die Querträgerprofile (14) sind über Klemmstücke (16) mit den Aussenrahmenlängsträgern (18) verbunden, angrenzende Teilstücke von Längsträgerprofilen (24) über Klemmstücke (16) mit Aussenrahmenquerträgern (20).

## Beschreibung

Die Erfindung bezieht sich auf eine selbsttragende Plattform in Klemmbauweise, mit längs- oder querverlegten Bodenplatten, für Nutzfahrzeuge.

Bekannte Plattformen dieser Art haben als Hauptbestandteile beispielsweise zwei Längsträgerprofile aus einer stranggepressten Aluminiumlegierung und eine Anzahl in geeignetem Abstand zueinander angeordneter Querträgerprofile, welche die Längsträgerprofile zusammenhalten und längsverlegte Bodenplatten aufnehmen und unterstützen.

Bei einer vor allem für leichtere Fahrzeuge bestimmten Bauart derartiger Plattformen sind die Längsträger des Aussenrahmens gleichzeitig als Längsträgerprofile ausgebildet, wobei die Querträgerprofile daran stirnseitig verbunden sind. Zum Aussenrahmen gehören auch zwei Querträger, in diesem Fall wird von einer Plattform mit einem tragenden Aussenrahmen gesprochen. Nach diesen Ausführungsformen sind Längsträgerprofile und Querträgerprofile übereinander auf zwei verschiedenen Ebenen angeordnet.

Bei einer anderen, vor allem für schwerere Fahrzeuge bestimmten Bauart mit stranggepressten Aluminiumprofilen sind spezielle, in Abstand vom Aussenrahmen einer Plattform verlaufende, als Hauptlängsträger wirkende Längsträger montiert. Die Querträgerprofile sind durch im Steg der Längsträgerprofile ausgesparte Durchbrüche gesteckt und stossen stirnseitig an den Aussenrahmen, welcher zwei Aussenrahmenlängsträger und zwei Aussenrahmenquerträger umfasst. Man spricht in diesem Fall von einer Plattform mit innenliegendem Tragrahmen.

Bei beiden bekannten Arten von Aluminium-Plattformen hat man bisher, wie bei Stahl-Plattformen üblich, die Längs- und Querträgerprofile und die Aussenrahmenlängs- und -querträger durch Schweissen miteinander verbunden.

In der EP-A1 0186625 wird eine Aluminium-Plattform für Strassen- oder Schienenfahrzeuge beschrieben, welche Längsund diese durchgreifende Querträgerprofile und einen Aussenrahmen hat, der der Aufnahme von in Längsrichtung verlaufenden Bodenplanken dient. Die Querträgerprofile sind mit mindestens einer hinterschnittenen Nut versehen und mit Klemmstücken an den Längsträgern und/oder an den Aussenrahmenlängsträgern befestigt. Der Übergang von einer geschweissten zu einer geschraubten Aluminium-Plattform bringt eine Arbeitszeiteinsparung, eine vereinfachte Montage, gleichbleibende Qualität und anodisierbare Aussenrahmen.

Der Erfinder hat sich die Aufgabe gestellt, eine Plattform der eingangs genannten Art zu schaffen, welche alle Vorteile von geschraubten Klemmverbindungen nutzen kann, jedoch eine durchbruchfreie Integralbauweise erlaubt, wobei Längs- und Querträgerprofile auf einer Ebene liegen sollen. Die stranggepressten Träger und die Bodenplatten, vorzugsweise wenigstens im Stossbereich, sollen aus einer handelsüblichen Aluminium-Strangpresslegierung bestehen.

Die Aufgabe wird erfindungsgemäss dadurch gelöst, dass sich innerhalb eines biegesteifen Aussenrahmens über die ganze Breite erstreckende Querträgerprofile und sich über wenigstens einen Teil der Länge des Aussenrahmens erstreckende, im Bereich der Querträger durchschnittene und unterbrochene Längsträgerprofile mittels verdrehungssicherer Winkelstücke auf einer Ebene miteinander verbunden sind, welche Winkelstücke mit aussenliegenden, sich über beide Schenkel erstreckenden Führungsrippen durch Klemmstücke formschlüssig auf entsprechende Führungsflächen von aneinanderliegenden Quer-und Teillängsträgerprofilen geklemmt sind, wobei die Querträgerprofile über Klemmstücke mit den Aussenrahmenlängsträgern verbunden sind, und angrenzende Teilstücke von Längsträgerprofilen über Klemmstücke mit den Aussenrahmenquerträgern verbunden sind.Weiterbildende und spezielle Ausführungsformen der erfindungsgemässen Plattform sind Gegenstand von abhängigen Patentansprüchen.

Obwohl die Querträgerprofile nicht durch Durchbrüche geführt sind, werden alle Schweissverbindungen einer üblichen, selbsttragenden Plattform durch lösbare, montagefreundliche Schraubverbindungen ersetzt.

Die Bodenplatten können längs- oder querverlegt sein, je nach der Ausbildung der Plattform. Insgesamt ist die Variante mit längsverlegten Bodenplatten günstiger, die Längsträgerprofile müssen nur über einen Teil der Plattform ausgebildet sein. Die Längsträgerprofilteilstücke dienen als Verstärkung, insbesondere zwischen dem vorderen Aussenrahmenquerträger und dem vordersten Querträgerprofil und/ oder dem hinteren Aussenrahmenquerträger und dem hintersten Querträgerprofil, wenn z.B.
- bei einem Stop die nach vorne rutschende Ladung über die Stirnwandstützen ein Drehmoment erzeugt,
- die mit Schwung abgeklappte hintere Bordwand ein Drehmoment erzeugt,
- in einer vorderen oder hinteren Plattformecke ein Fahrzeug-Ladekran montiert ist,
- beim Rückwärtskippen Schüttgut abgeladen wird.

Weiter können im zentralen Bereich der Plattform Teilstücke verstärkender Längsträger- oder Querträgerprofile angebracht sein, z.B. wo der Pressträger einer Kippvorrichtung angreift.

Die erfindungsgemässe, selbsttragende Plattform ist insbesondere auch für Nutzfahrzeuge mit einer Kippvorrichtung geeignet und vorteilhaft einsetzbar. Die Klemmbauweise ist montagefreundlich und beinhaltet Vorfabrikationsmöglichkeiten. Fehlende Schweissnähte erlauben eine leichte und vollständige Demontage und dekorative Oberflächenschutzbehandlungen. Die verwendeten Aluminiumlegierungen bieten keine Korrosionsprobleme und sind auf einen langen Dauergebrauch ausgerichtet, wobei das geringe Gewicht der Plattform ökonomisch und ökologisch besonders vorteilhaft ist.

Die Erfindung wird anhand der in der Zeichnung dargestellten Ausführungsbeispiele, welche auch Gegenstand von abhängigen Patentansprüchen sind, näher erläutert. Es zeigen schematisch:
- Fig. 1 eine Ansicht von unten einer Plattform in Integralbauweise für Nutzfahrzeuge, mit längsverlegten Bodenplatten,
- Fig. 2 eine entlang der Längsachse L aufgeschnittene Seitenansicht gemäss Fig. 1,
- Fig. 3 eine Ansicht von unten einer Plattform in Integralbauweise für Nutzfahrzeuge, mit querverlegten Bodenplatten,
- Fig. 4 eine entlang der Längsachse L aufgeschnittene Seitenansicht gemäss Fig. 3,
- Fig. 5 einen Querschnitt durch ein Profil für einen Längs- oder Querträger,
- Fig. 6 eine Seitenansicht eines Winkelstücks,
- Fig. 7 eine Draufsicht auf ein Winkelstück gemäss Fig. 6,
- Fig. 8 eine Variante eines Profils gemäss Fig. 5,
- Fig. 9 eine Variante eines Trägerprofils,
- Fig. 10 einen Querschnitt durch ein Aussenrahmenprofil mit angedeuteten Boden- und Trägerprofil,
- Fig. 11 eine Variante von Fig.10,
- Fig. 12 einen Querschnitt durch ein verkürzt dargestelltes Bodenprofil,
- Fig. 13 eine aufgeschnittene Ansicht eines Klemmstücks,
- Fig. 13aeineAnsichteinerKtemmuttervon unten,

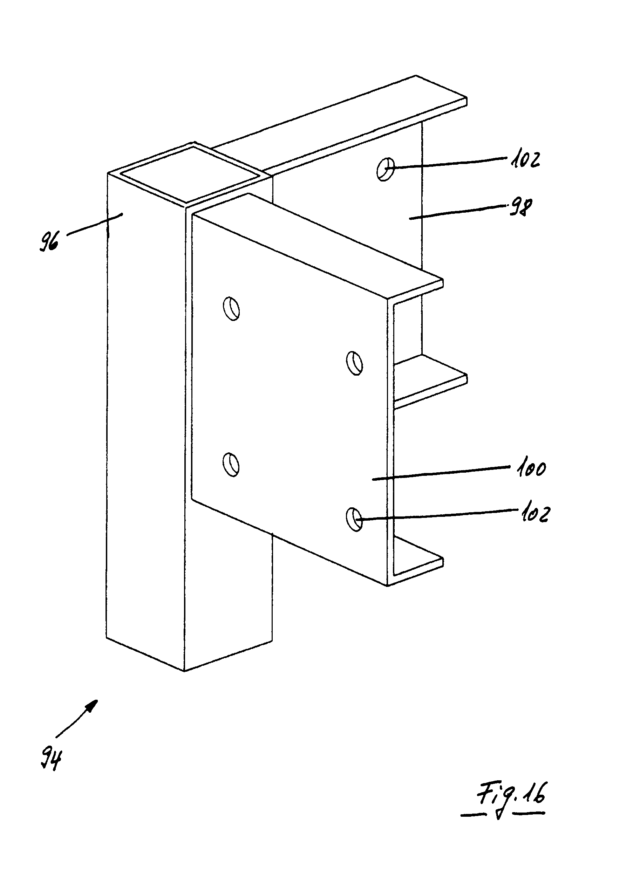

- Fig. 14 eine Ansicht einer Verbindung von zwei zusammengehängten Bodenprofilen mit einem Trägerprofil,
- Fig. 15 eine Seitenansicht von Fig.14, und
- Fig. 16 ein Rahmeneckstück.

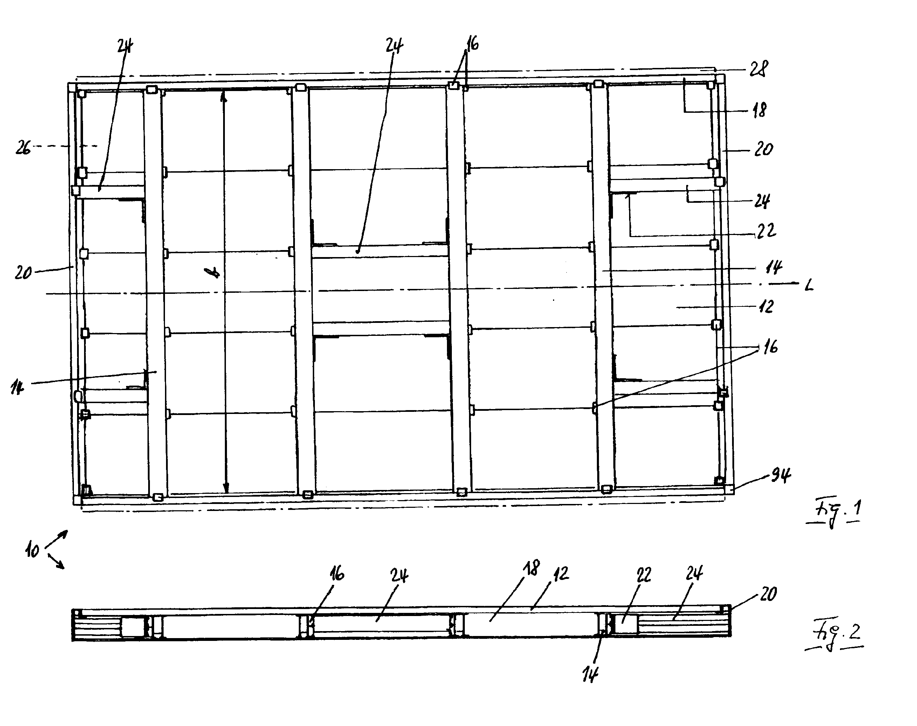

Eine Plattform 10 mit längsverlegten Bodenplatten 12 umfasst gemäss Fig. 1 und 2 sich über die ganze Breite b des Aussenrahmens erstreckende Querträgerprofile 14, welche beidends über Klemmstücke 16 mit Aussenrahmenlängsträgern 18 lösbar verbunden sind.

Die Plattform 10 umfasst keine durchgehenden Längsträger, Teilstücke von Längsträgerprofilen 24 sind auf gleicher Ebene über Winkelstücke 22 mit Querträgerprofilen 14 und/oder über Klemmstücke 16 mit einem Aussenrahmenquerträger 20 lösbarverbunden. Im vorliegenden Fall sind sechs Teilstücke von Längsträgerprofilen 24 montiert:
- Im Zentrumsbereich der Plattform 10, in welchem der Pressträger eines Kippers angreifen kann.
- Zwischen dem vordersten Querträgerprofil 14 und dem vorderen Aussenrahmenquerträger 20 zum Auffangen eines durch allenfalls nach vorne rutschendes Ladegut über Rungen ausgeübten Drehmoments und/oder zur Befestigung eines gestrichelt angedeuteten Hebezeugs 26, beispielsweise eines Lade- und Entladekrans.
- Zwischen dem hintersten Querträger 14 und dem hinteren Aussenrahmenquerträger 20 für die Verstärkung des Bereichs der hinteren Ladebordwand, welche beispielsweise beim Hinunterfallen ein Drehmoment auf den hinteren Aussenrahmenquerträger 20 ausüben kann.

Die Aussenrahmenlängs- und Aussenrahmenquerträger 18, 20 sind über Rahmeneckstücke 94 miteinander verbunden, welche in Fig. 16 im Detail dargestellt sind.

Querträgerprofile 14, Teilstücke von Längsträgerprofilen 24, Aussenrahmenlängsträger 18 und Aussenrahmenquerträger 20 bilden zusammen mit den Winkelstücken 22 und den Klemmstücken 16 eine selbsttragende, verwindungssteife Plattform 10, welche auch als Integralplattform für Nutzfahrzeuge bezeichnet wird. Auf dieser Plattform kann jede Art von an sich bekannten Bodenplatten 12 aufgebracht werden, besonders vorteilhaft sind jedoch Bodenprofile gemäss Fig. 12, welche in die integrale Plattform einbezogen werden können und diese weiter versteifen.

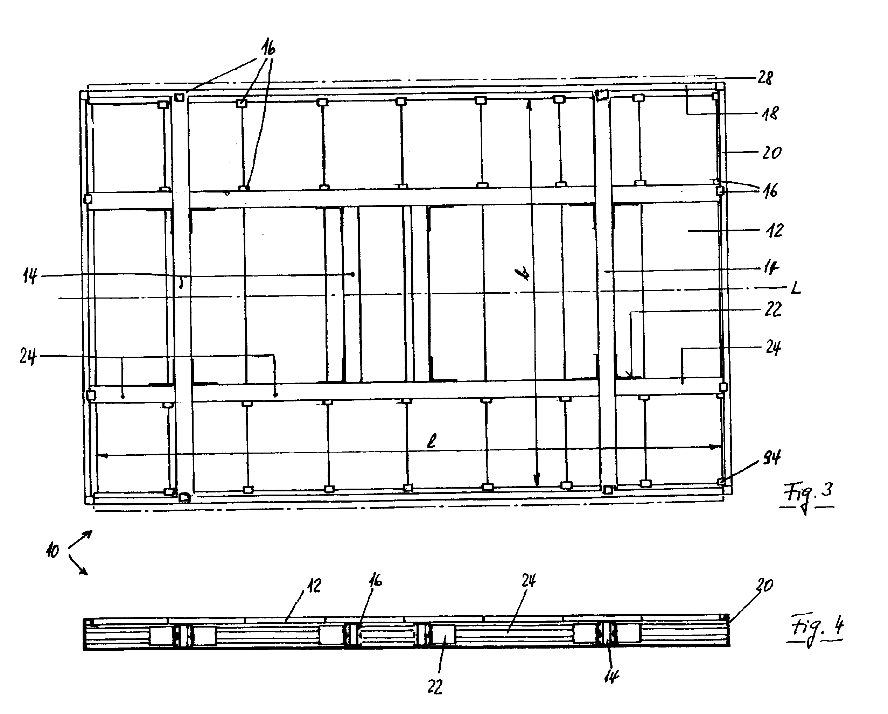

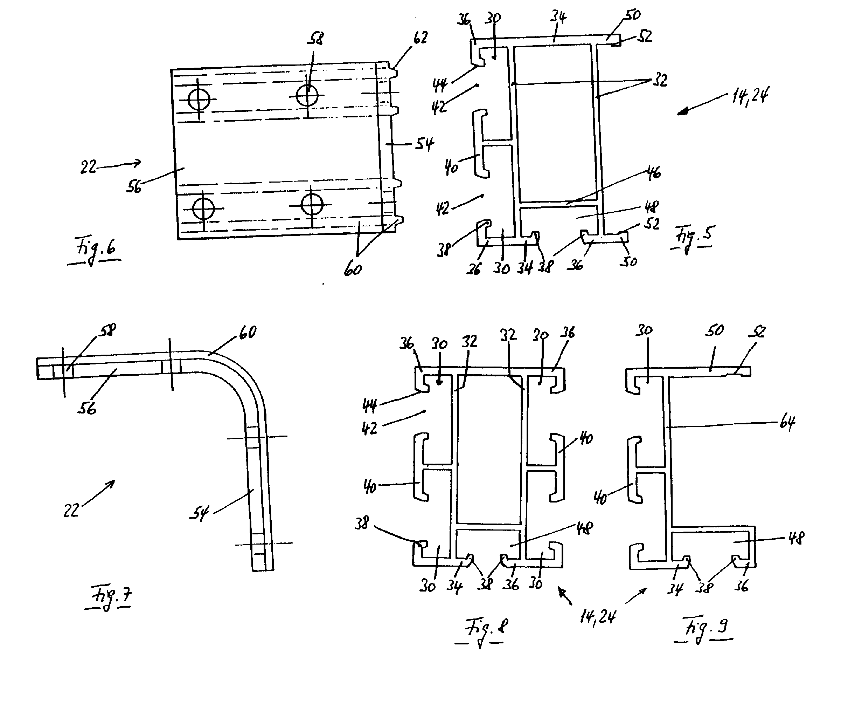

In der Ausführungsform gemäss Fig. 3 und 4 mit querverlegten Bodenplatten 12 erstrecken sich die Teilstücke der Längsträgerprofile 24 über die ganze Länge 1 der Plattform 10. Die Teilstücke der Längsträgerprofile 24 sind mit Winkelstücken 22 auf der gleichen Ebene mit den sich wiederum über die ganze Breite b erstreckenden Querträgerprofilen 14 oder über Klemmstücke 16 mit einem Aussenrahmenquerträger 20 verschraubt. Die Querträger 14 sind beidends über Klemmstücke 16 mit den Aussenrahmenlängsträgern 18 verbunden.

Die Integral-Plattform 10 gemäss Fig.3 und 4 weist dieselben vorteilhaften Eigenschaften wie die Ausführungsform mit längsverlegten Bodenplatten 12 (Fig. 1 und 2) auf, braucht jedoch wegen der durchgehenden Teilstücke der Längsträgerprofile 24 etwas mehr Material.

In den Fig. 1 und 3 ist der Vollständigkeit halber eine Schüttleiste 28 angedeutet.

Fig. 5 zeigt ein Längs- oder Querträgerprofil 14, 24, im übrigen wie andere Varianten auch kurz Trägerprofil genannt, welches als im wesentlichen rechteckiges Hohlprofil ausgebildet ist. An einem Trägersteg 32 sind zwei aussenseitig nebeneinanderliegende, hinterschnittene Klemmutternuten 30 ausgebildet, welche in Längsrichtung des Profils 14, 24 verlaufen. Von den Breitseiten 34 des Hohlraums der Trägerprofile 14, 24 kragen flächenbündig Profilschenkel 36 ab, welche unter Bildung von längslaufenden Profilnasen 38, im Zusammenwirken mit einem im wesentlichen T-förmigen, entsprechenden Profilansatz 40, die beiden hinterschnittenen Klemmutternuten 30 bilden.Die Eintrittsschlitze 42 der hinterschnittenen Klemmuternuten 30 sind durch sich nach innen verjüngende Führungsflächen 44 begrenzt.

Aussenliegend von einem Quersteg 46 ist eine nach unten offene, hinterschnittene Klemmutternut 48 ausgebildet, durch die Breitseite 34 bildende, abgewinkelte Profilschenkel mit einer Profilnase 38 begrenzt.

Zur Bildung von Verbindungsteilen für Klemmstücke 16 kragtje ein flächenbündigerAuflagesteg 50 ab, mit je einer innenliegenden Abstufung 52.

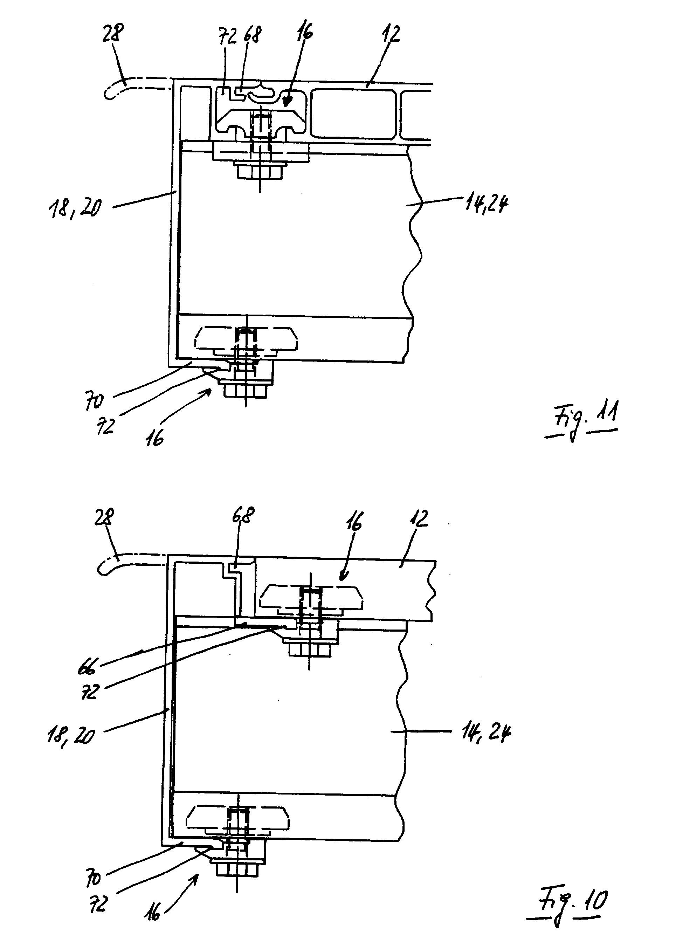

Fig. 6 und 7 zeigen ein Winkelstück 22 mit gleichlangen, rechtwinkligen Schenkeln 54, 56, die jedoch auch ungleich lang sein können. In diesen Schenkeln 54, 56 sind je vier Löcher 58 für die Schraube von Klemmstücken 16 (Fig. 1 bis 4) ausgespart. Auf der Aussenseite des Winkelstücks 22 verlaufen vier paarweise angeordnete Führungsrippen 60, welche sich parallel verlaufend über die ganze Länge der beiden Schenkel 54, 56 erstrecken. Die Führungsrippen 60 sind im wesentlichen trapezförmig ausgebildet, sie können in die Eintrittsschlitze 42 der hinterschnittenen Klemmuternuten 30 von Trägerprofilen 14, 24 geführt werden, bis die Schrägflächen 62 auf den Führungsflächen 44 aufliegen. Dadurch entsteht eine biegesteife, rechtwinklige Verbindung von Trägerprofilen 14, 24 in einer Ebene.

Das in Fig. 8 dargestellte Trägerprofil 14, 24 unterscheidet sich dadurch von demjenigen gemäss Fig. 5, dass auf der Aussenseite von beiden Trägerstegen 32 des Hohlprofils zwei aneinanderliegende, hinterschnittene Klemmutternuten 30 ausgebildet sind.

Trägerprofile 14, 24 gemäss Fig.8 können beidseitig mit Winkelstücken verschraubt werden, wie dies z.B.in Fig. 3 bezüglich der Querträgerprofile 14 dargestellt ist.

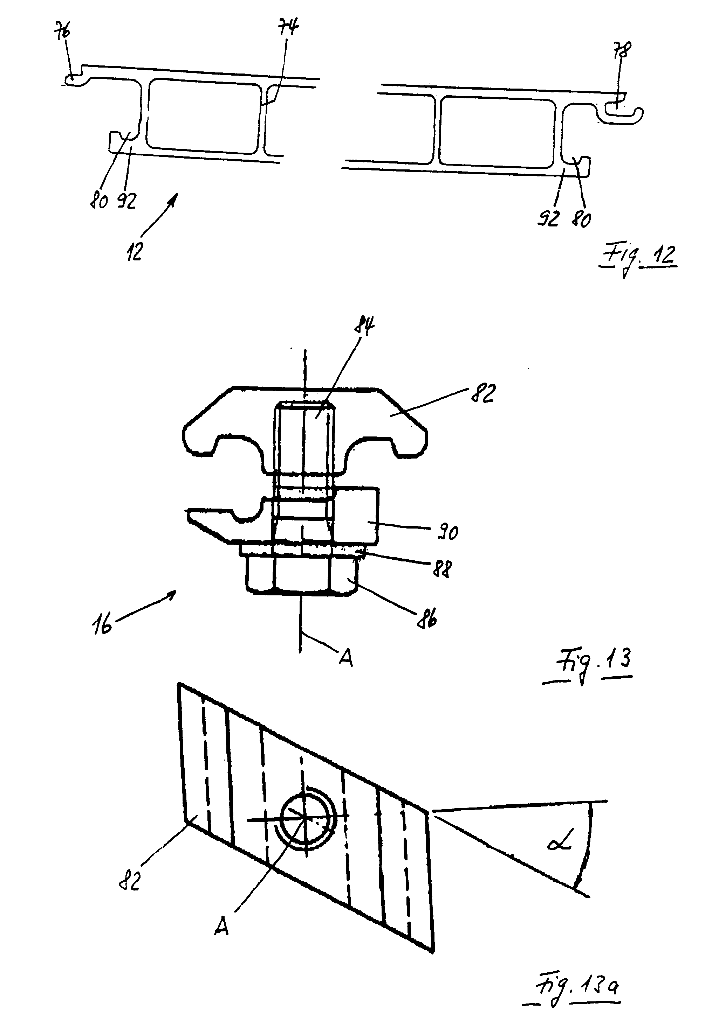

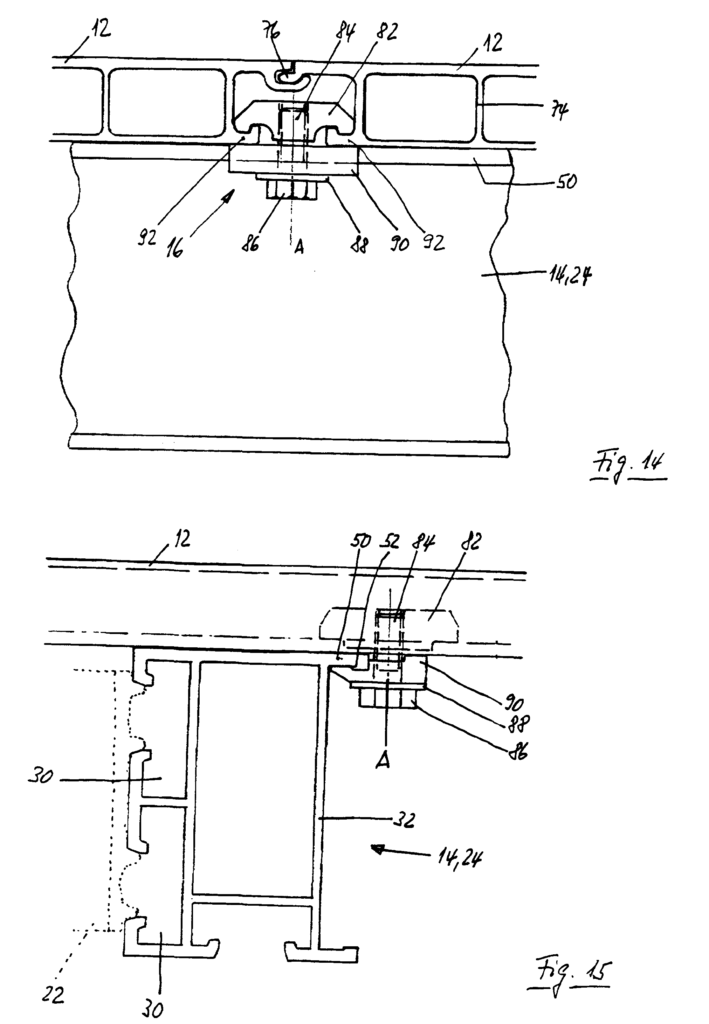

Das in Fig. 9 gezeigte Querträgerprofil 14 ist nicht als Hohlkammerprofil ausgebildet, es hat lediglich einen Trägersteg 64. Auf einer Seite dieses Trägerstegs 64 sind zwei aneinanderliegende hinterschnittene Klemmutternuten 30 zur Befestigung eines Winkelstücks 22(Fig. 6, 7), auf der andern Seite eine nach unten offene Klemmutternut 48 und ein verlängerter obenliegender Auflagesteg 50 zum Angriff einer Klemmmutter 16 ausgebildet. Bei längsverlegten Bodenplatten 12 (Fig. 1 und 2) können auch Teilstücke von Längsträgerprofilen 24 gemäss Fig.9 ausgebildet sein. In den Fig. 10, 11 sind die den Aussenrahmen bildenden Längsund Querträger 18, 20 näher erläutert. In der Ausführungsform gemäss Fig. 10 sind die längslaufend dargestellten Bodenplatten 12 auf einem unter Bildung einer Nut 68 zweimal abgewinkelten Profilschenkel 66 eines Aussenrahmenträgers 18, 20 über ein Klemmstück 16, welches in Fig. 13 im Detail gezeigt ist, befestigt. Mit demselben Klemmstück 16 ist das Trägerprofil 14, 24 mit dem Aussenrahmen 18,20 verbunden. Ein unten senkrecht abgewinkelter Profilschenkel 70, ebenfalls mit einerAbstufung 72, dient der Befestigung von Trägerprofilen 14, 24 gemäss Fig. 5, 8 oder 9, ebenfalls mit einem Klemmstück 16.

In der im übrigen entsprechenden Fig. 11 ist die Bodenplatte 12 stirnseitig, rechtwinklig zum vom gleichen Klemmstück 16 befestigten Trägerprofil 14, 24 verlaufend gezeigt. Es ist eine hinterschnittene Nut 72 ausgebildet, dank welcher wie erwähnt drei Profile 12, 14 oder 24, 18 oder 20 mit ein- und demselben Klemmstück 16 verbunden werden können.

Strichpunktiert ist jeweils die Schüttleiste 28 angedeutet.

Ein in Fig. 12 dargestelltes Bodenprofil 12, ein Aluminium-Strangpressprofil, ist mit Trennstegen 74 in im wesentlichen rechteckförmige Kammern unterteilt. Für die Montage werden die Bodenprofile 12 mittels einends angeformter Profilnasen 76 und andernends mit entsprechend ausgeformten Nuten 78 zusammengehängt. Dabei entsteht durch zwei von Profillappen 92 gebildete Mulden 80 eine hinterschnittene Nut zur Aufnahme von Klemmuttern.

Ein in Fig. 13 dargestelltes Klemmstück umfasst eine Klemmmutter, welche in eine hinterschnittene Nut eingeführt, um 60° gedreht und mit einer Klemmstückschraube 84, im vorliegenden Fall mit einem Sechskantkopf 86, angezogen wird. Die Klemmutter 82 ist, in Richtung der Achse A betrachtet, rechteckig oder, wie in Fig. 13a dargestellt, parallelogrammförmig mit einem Winkel a von 30° ausgebildet. Parallelogrammförmige Klemmuttern gemäss Fig. 13a schlagen nach einer Drehung von 60° an der inneren Nutenwand an und können nicht mehr weiter drehen.

Beim Anziehen der Klemmschraube 84 wird eine Klemmkraft entwickelt, welche vom Sechskantkopf 86 über eine Unterlagsscheibe 88 und ein Profilstück 90, mit der Klemmutter 82 als Widerlager, auf die zu verbindenden Profile übertragen wird. Klemmstücke sind beispielsweise aus der EP,A1 0186625,0244350 und 0375619 bekannt.

In Fig. 14 und 15 wird gezeigt, wie zwei zusammengehängte Bodenprofile 12 mit einem Klemmstück 16 an einem Trägerprofil 14, 24 gemäss Fig. 5 befestigt sind. Die Klemmutter 82 ist in der durch die Mulden 80 (Fig.12) gebildeten hinterschnittenen Nut festgeklemmt.

Die die Mulden 80 bildenden Profillappen 92 werden auf den Auflagesteg 50 des Trägerprofils 14, 24 gedrückt, weil auf der andern Seite das Profilstück 90 angreift. Dieses ist so augebildet, dass es in die zwischen der Abstufung 52 und dem Trägersteg 32 gebildete Längsnut passt. In die nebeneinanderliegenden Mulden des Trägerprofils 14, 24 können weitere Klemmuttern zur Befestigung eines punktiert angedeuteten Winkelstücks 22 eingeführt sein. Am Winkelstück 22 kann ein weiteres, rechtwinklig verlaufendes Trägerprofil befestigt sein.

In Fig. 16 ist eines der vier Rahmeneckstücke 94 dargestellt, welches aus einem im Querschnitt quadratischen Vierkantrohr 96 mit zwei rechtwinklig zueinander angeschweissten, nach innen offenen U-Profilen 98, 100 besteht. Diese U-Profile dienen der Aufnahme je eines Aussenrahmenlängs- und Aussenrahmenquerträgers 18, 20 (Fig. 1, 2), welche unter Benützung von Schraubenlöchern 102 miteinander verschraubt werden.

## Patentansprüche

1. Selbsttragende Plattform (10) in Klemmbauweise, mit längs- oder querverlegten Bodenplatten (12), für Nutzfahrzeuge,
dadurch gekennzeichnet, dass
sich innerhalb eines biegesteifen Aussenrahmens (18, 20) über die ganze Breite (b) erstreckende Querträgerprofile (14) und sich über wenigstens einen Teil der Länge (1) des Aussenrahmens erstreckende, im Bereich der Querträgerprofile (14) durchschnittene und unterbrochene Längsträgerprofile (24) mittels verdrehungssicherer Winkelstücke (22) auf einer Ebene miteinander verbunden sind, welche Winkelstücke (22) mit aussenliegenden, sich über beide Schenkel (54, 56) erstreckenden Führungsrippen (60) durch Klemmstücke (16) formschlüssig auf entsprechende Führungsflächen (44) von aneinanderliegenden Quer- und Teillängsträgerprofilen (14,24) geklemmt sind, wobei die Querträgerprofile (14) über Klemmstücke (16) mit den Aussenrahmenlängsträgern (18) verbunden sind, und angrenzende Teilstücke von Längsträgerprofilen (24) über Klemmstücke (16) mit Aussenrahmenquerträgern (20) verbunden sind.

2. Plattform (10) nach Anspruch 1, dadurch gekennzeichnet, dass die Längs- und Querträgerprofile (14, 24) als im wesentlichen rechteckige Hohlprofile ausgebildet sind, mit zwei aneinanderliegenden, hinterschnittenen Nuten (30) für Klemmuttern (82) von Klemmstücken (16) an wenigstens einen Trägersteg (32) und beim andern Trägersteg (32) ohne hinterschnittene Nuten aussenbündig zwei Auflagestege (50) mit einer Abstufung (52) ausgebildet sind, wobei die die hinterschnittenen Klemmutternuten (30) bildenden Profilschenkel (36) eine sich nach innen verjüngende Führungsfläche (44) für die Führungsrippen (60) des Winkelstücks (22) haben.

3. Plattform (10) nach Anspruch 1, dadurch gekennzeichnet, dass die Querträgerprofile (14) im wesentlichen I-förmig ausgebildet sind, mit zwei auf einer Seite des Trägerstegs (64) aneinanderliegenden, hinterschnittenen Nuten (30) für die Klemmuttern (82) von Klemmstücken, wobei die die hinterschnittenen Klemmutternuten (30) bildenden Profilschenkel (36) vorzugsweise eine sich nach innen verjüngende Führungsfläche (44) für die Führungsrippen (60) des Winkelstücks (22) haben.

4. Plattform (10) nach Anspruch 2 oder 3, dadurch gekennzeichnet, dass die an den Aussenrahmen grenzenden Trägerprofile (14, 24) eine nach unten offene, hinterschnittene Klemmutternut (48) zur Aufnahme der Klemmmutter (82) eines Klemmstücks (16) haben.

5. Plattform (10) nach einem derAnsprüche 1 bis 4, dadurch gekennzeichnet, dass bei längsverlegten Bodenplatten (12) zwischen den Aussenrahmenquerträgern (20) und dem jeweils benachbarten Querträgerprofil (14) wenigstens je ein Teilstück eine Längsträgerprofils (24) in Klemmbauweise befestigt ist.

6. Plattform (10) nach einem derAnsprüche 1 bis 4, dadurch gekennzeichnet, dass bei Kippern im Bereich des Pressträgerangriffs parallel zu den Bodenplatten (12) Teilstücke eines Längs- oder Querträgerprofils (14, 24) in Klemmbauweise eingesetzt sind.

7. Plattform (10) nach einem derAnsprüche 1 bis 6, dadurch gekennzeichnet, dass die rechtwinkligen Winkelstücke (22) auf der Aussenseite beider Schenkel (54, 56) vier paarweise parallel verlaufende Führungsrippen (60) von im wesentlichen trapezförmigem Querschnitt haben, wobei aus jedem Schenkel (54,56) des Winkelstücks (22) mindestens zwei Löcher (58) für Klemmstückschrauben (84) ausgespart sind.

8. Plattform (10) nach einem derAnsprüche 1 bis 7, dadurch gekennzeichnet, dass die Klemmverbindung eines Trägerprofils (14, 24) mit einem Aussenrahmenträgerprofil (18, 20) ein Klemmstück (16) aus einer in die nach unten offene, hinterschnittene Nut (48) des betreffenden Trägerprofils (14, 24) eingeführte Klemmutter (82) und einem über eine Klemmutterschraube (84) angezogenes Profilstück (90) umfasst, welches Klemmstück (16) an einem unten rechtwinklig abkragenden Profilschenkel (70) des Aussenrahmens festgeklemmt ist.

9. Plattform (10) nach einem derAnsprüche 1 bis 8, dadurch gekennzeichnet, dass die Bodenplatten (12) als Bodenprofile ausgebildet sind, welche - stirnseitig betrachtet - einends eine Profilnase (76) und andernends eine Nut (78) zum Anhängen des benachbarten Bodenprofils (12) mit der Profilnase (76) hat.

10. Plattform (10) nach Anspruch 9, dadurch gekennzeichnet, dass die Bodenprofile (12) - stirnseitig betrachtet - beidseits unten abkragende Profillappen (92) mit zur Bildung einer Mulde (80) nach oben abgewinkelten Enden haben, welche beim Zusammenhängen von zwei Bodenprofilen (12) eine hinterschnittene Nut zur Aufnahme einer Klemmutter (82) von Klemmstücken (16) bilden, welche dem gleichzeitigen Verbinden von zwei Bodenprofilen (12) mit einem Längsträger-(24), Querträger- (14) oder Aussenrahmenprofil (18, 20) dienen.
